# NEUE EUROPÄISCHE PATENTSCHRIFT

(11) **EP 1 306 597 B2**
(45) Veröffentlichungstag und Bekanntmachung des Hinweises auf die Entscheidung über den Einspruch: **20.08.2008**
(45) Hinweis auf die Patenterteilung: 02.03.2005
(21) Anmeldenummer: 02022343.4
(22) Anmeldetag: 08.10.2002
(51) Int. Cl.: F16K 27/00, F15B 13/00

(54) **Ventil**
Valve
Soupape

(30) Priorität: 23.10.2001 DE 10152179
(43) Veröffentlichungstag der Anmeldung: 02.05.2003
(73) Patentinhaber: Rexroth Mecman GmbH, 30453 Hannover (DE)
(72) Erfinder: Meyer, Ernst-August, 30974 Wennigsen (DE)
(74) Vertreter: Maiwald Patentanwalts GmbH

(56) Entgegenhaltungen:
- DE-U- 20 107 330
- DE-U- 29 904 363
- US-A- 2 656 851
- US-A- 5 601 415
- PATENT ABSTRACTS OF JAPAN vol. 2000, no. 12, 3. Januar 2001 (2001-01-03) & JP 2000 266214 A (SANKYO SEIKI MFG CO LTD;TOKYO BUREIZU KK), 26. September 2000 (2000-09-26)

## Beschreibung

Die Erfindung betrifft ein Ventil zum Schalten eines Druckmittelflusses mit einem eine Ventilmechanik enthaltenden Ventilkörper, an dem mindestens ein Speisedruckanschluss sowie mindestens ein Arbeitsanschluss zur ventilgesteuerten Beaufschlagung eines nachgeordneten Druckmittelaggregats vorgesehen ist. Insbesondere bezieht sich die vorliegende Erfindung auf ein elektropneumatisches Mehrwegeventil, welches im Verbund einer Ventileinheit, bestehend aus gleichartigen Ventilen, angeordnet ist.

Eine derartige Ventileinheit geht aus dem Prospekt "Pneumatik - Neuheiten" der Firma Rexroth Mecman GmbH (Druckblatt Nr. 885-890-293-3/ 04.01, Seiten 9 und 11) hervor. Die Ventileinheit besteht im Wesentlichen aus einer Mehrzahl gleichartiger Ventile, welche eine scheibenförmige geometrische Gestalt aufweisen. Die einzelnen Ventile sind über ihre großflächigen gegenüberliegenden parallelen Kontaktseiten aneinandergereiht. Zur Druckmittelversorgung jedes Ventils ist hier eine separate Grundplatte vorgesehen, welche längsverlaufende Druckmittelkanäle zur Führung des Speisedrucks sowie zur Ableitung von Abluft aufweist. Alternativ hierzu können derartige Kanäle auch in dem eigentlichen Ventilkörper des Ventils integriert werden, so dass auch auf die vorstehend beschriebene separate Grundplatte gänzlich verzichtet werden kann. Die vorliegende Erfindung ist auch auf derartige Ventile anwendbar.

Jedes Ventil besteht im Prinzip aus einem Ventilkörper, in welchem eine Ventilmechanik zum Schalten des den Ventilkörper durchströmenden Druckmittelflusses untergebracht ist. Die Ventilmechanik kann beispielsweise aus einem herkömmlichen Ventilschieber bestehen, welcher druckmittelvermittelnd zwischen einem Speisedruckanschluss sowie einem Entlüftungsanschluss einerseits sowie mindestens einem Arbeitsanschluss andererseits nach Art eines 3/2-Wege-Ventils oder dergleichen schaltet. Der Arbeitsanschluss steht über eine Verbindungsrohrleitung mit einem Druckmittelaggregat - beispielsweise einem Pneumatikzylinder - in Verbindung, um die Beaufschlagung mit Druckmittel zu steuern. Zu diesem Zwecke ist die Ventilmechanik des Ventils über eine elektromagnetische Antriebseinheit betätigbar. Elektrische Ansteuerungssignale gelangen mittels eines Datenbusses oder über eine konventionelle Verdrahtung an die elektromagnetische Antriebseinheit des Ventils.

In jüngster Zeit geht der technische Trend bei Ventileinheiten vermehrt in Richtung einer möglichst kompakten Bauform. Moderne Ventileinheiten sind in der Lage bei minimalen äußeren geometrischen Abmessungen eine hohe Durchflussrate des Druckmittels zu gewährleisten. Allerdings stößt dieses Ziel wegen bisher bestehender konstruktiver Restriktionen an seine Grenzen. So wird die Breite eines bei einer Ventileinheit verwendeten Ventils durch die Anschlussmittel bestimmt, welche sich an der Schmalseite des Ventilkörpers befinden. Als Anschlussmittel kommen hier gewöhnlich Push-In-Fittings oder Verschraubungen zum Einsatz. Ein Puish-In-Fitting stellt eine mechanische Verbindung zu einer hierin einsteckbaren Verbindungsrohrleitung direkt beim Einstecken her. Hierbei kommen widerhakenartige Krallen in die Außenwandung der gewöhnlich aus Kunststoff bestehenden Verbindungsrohrleitung umgebenden Betätigungsring des Push-In-Fittings wieder lösbar, so dass die Verbindungsrohrleitung nachfolgend aus dem Push-In-Fitting widerstandslos herausziehbar ist.

Aus der US 5,601,415 geht ein gattungsgemäßes elektropneumatisches Ventil hervor, dessen Arbeitsanschluss / Speisedruckanschluss seitens eines distalen Endes eines Anschlussrohrstückes angeordnet ist. Jedes Anschlussrohrstück wird an dem ventilseitigen Ende mittels einer Befestigungsplatte am Ventilkörper angebracht, welche zu diesem Zwecke mit Durchgangsbohrungen versehen ist, durch welche die einzelnen Anschlussrohrstücke hindurch gesteckt werden. Von Nachteil ist bei dieser Lösung, dass mehrere Bauteile erforderlich sind, um den Druckmittelanschluss zu bewerkstelligen.

Die DE 201 07 330 U1 offenbart eine innerhalb einer Ventileinheit angeordnete Anzahl von einzelnen elektropneumatischen Mehnvegeventilen, welche über eine zentrale Druckmittelversorgung verfügen, indem das Druckmittel über eine einzige Druckmittelleitung hierin eingespeist wird. Es werden hier jedoch keine näheren Auskünfte darüber gegeben, in welcher Art und Weise die Verbindung zwischen dem als flexible Druckmittelleitung ausgebildeten Anschlussrohrstück am Ventilkörper erfolgt. Zeichnerisch dargestellt ist eine Art Ring im Anschlussbereich des Anschlussrohrstücks zum Ventil, was daraufhindeutet, dass die flexible Druckmittelleitung hier in herkömmlicher Weise mittels eines Push-In-Fittings befestigt ist.

Der Platzbedarf für die Bauteile des Push-In-Fittings oder einer Verschraubung sind bezogen auf den Außendurchmesser der Verbindungsrohrleitung allerdings relativ groß und bestimmen die minimale Breite des Ventilkörpers. Somit ist bei diesen sehr kompakten, schmalen Ventilen die Höhe des Durchflusses begrenzt durch die Anschlussmittel, weil diese an der Schmalseite des Ventils einer Ventileinheit vorzusehen sind.

Es ist daher die Aufgabe der vorliegenden Erfindung ein Ventil der vorstehend vorgestellten Art dahingehend weiter zu verbessern, dass eine größtmögliche Durchflussrate bei minimalen geometrischen Abmessungen des Ventilkörpers realisierbar ist, um die Kompaktheit einer hieraus bestehenden Ventileinheit zu erhöhen.

Die Aufgabe wird ausgehend von einem Ventil gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder. Hinsichtlich eines Verfahrens zur Herstellung des erfindungsgemäß ausgebildeten Ventilkörpers wird die Aufgabe durch die Ansprüche 7 und 8 gelöst. Eine erfindungsgemäß aufgebaute Ventileinheit geht aus den Ansprüchen 9 und 10 hervor.

Die Erfindung schließt die technische Lehre ein, dass der Arbeitsanschluss und/oder der Speisedruckanschluss eines gattungsgemäßen Ventils am distalen Ende eines Anschlussrohrstücks ausgebildet ist, dessen proximales Ende dagegen an eine korrespondierende Anschlussöffnung im Ventilkörper direkt angeformt ist. Das Anformen kann durch Angießen, Ankleben, Anschweißen oder dergleichen erfolgen. Ein Anschweißen wäre mittels Lasertechnik oder durch ein Anbacken (Thermoformen) denkbar.

Der Vorteil der erfindungsgemäßen Lösung besteht insbesondere darin, dass die die Durchflussrate bestimmende Engstelle nun vom Ventilkörper weggelegt wird. Ein Arbeitsanschluss - beispielsweise in Form eines Push-In-Fittings oder einer Verschraubung - befindet sich also nicht mehr am Ventilkörper, sondern am distalen Ende eines speziellen Anschlussrohrstücks, dessen maximaler Außendurchmesser der Breite des Ventilkörpers entsprechen kann. Dieses führt zu einer deutlichen Erhöhung machbarer Durchflussraten bei den hier einschlägigen Ventilen, weil nicht mehr die Bauteile des Arbeitsanschlusses und/oder des Speisedruckanschlusses die höchst mögliche Durchflussrate bestimmen sondern alleine die Ventilmechanik im Ventilkörper.

Vorzugsweise ist das direkt am Ventilkörper angebundene Anschlussrohrstück als flexible Druckmittelleitung aus einem weichen Kunststoff ausgebildet, wogegen der Ventilkörper in herkömmlicher Weise aus einem Metall oder aus einem starren Kunststoff bestehen kann. Es ist jedoch auch möglich, ein unflexibles, starres Anschlussrohrstück im Rahmen der vorliegenden Erfindung zu verwenden, wobei dessen durch Biegen bestimmbarer Verlauf die Lage des Arbeitsanschlusses und/oder des Speisedruckanschlusses definiert.

Am distalen Ende des Anschlussrohrstücks befindet sich vorzugsweise ein herkömmliches Kupplungselement, welches den Arbeitsanschluss bzw. den Speisedruckanschluss bildet, über das eine weiterführende Verbindungsrohrleitung lösbar anzuschließen ist. Das Kupplungselement kann beispielsweise nach Art eines Push-In-Fittings ausgebildet sein. Es ist auch denkbar, das Kupplungselement als eine Art Steckbuchse oder dergleichen auszubilden.

Gemäß einer weiteren die Erfindung verbessernden Maßnahme ist vorgesehen, dass das proximale Ende des Anschlussrohrstücks in eine an die äußere Form des Ventilkörpers angepasste Befestigungsplatte ausläuft, womit eine lösbare Befestigung des Arbeitsanschlusses bzw. des Speisedruckanschlusses möglich ist. Mit der Befestigungsplatte kann konkret eine lösbare Verbindung des Anschlussrohrstücks an den Ventilkörper hergestellt werden. Diese lösbare Verbindung kann über mindestens eine Schraube, vorzugsweise eine Zentralschraube, oder nach Art einer Schnappverbindung oder dergleichen erfolgen. Über die Anlagefläche der Befestigungsplatte am Ventilkörper lässt sich eine zuverlässig dichtende Verbindung herstellen. Erforderlichenfalls kann an dieser Stelle ein separates Dichtungselement vorgesehen werden. Weiterhin ist es möglich, die Befestigungsplatte in einer korrespondierenden Ausnehmung am Ventilkörper unterzubringen, um eine insgesamt glatte Außenoberfläche des Ventilkörpers zu erzielen.

Das vorstehend dargestellte erfindungsgemäße Ventil lässt sich vorzugsweise durch Spritzgießen aus einem im Endzustand starren Kunststoff herstellen, wobei zunächst der Ventilkörper oder die an die Form des Ventilkörpers angepasste Befestigungsplatte in einem ersten Spritzgießschritt geformt wird und anschließend das Anschlussrohrstück in einem zweiten Spritzgießschritt aus einem relativ weicheren Kunststoff an den Ventilkörper bzw. die Befestigungsplatte direkt angeformt wird. Vorzugsweise wird sowohl der erste als auch der zweite Spritzgießschritt in demselben Spritzgießwerkzeug ausgeführt, um eine rationelle Herstellung zu gewährleisten.

Die erfindungsgemäß ausgebildeten Ventile werden vorzugsweise im Rahmen einer Ventileinheit verwendet, wobei die einzelnen Ventile scheibenförmig ausgebildet sind und über benachbarte großflächige Kontaktseiten aneinandergereiht sind, wobei das Anschlussrohrstück an der Schmalseite des Ventils angeordnet ist. Bei der Verwendung einer separaten Grundplatte zur Druckmittelversorgung der einzelnen Ventile kann insbesondere die Speisedruckversorgung hierüber erfolgen. Es ist jedoch auch denkbar sowohl die Speisedruckversorgung als auch den Arbeitsleitungsanschluss mittels des erfindungsgemäßen Anschlussrohrstückes vorzunehmen.

Weitere die Erfindung verbessernde Maßnahmen werden nachstehend gemeinsam mit der Beschreibung eines bevorzugten Ausführungsbeispiels der Erfindung anhand der einzigen Figur dargestellt. Die Figur zeigt eine Ventileinheit, bestehend aus einer Mehrzahl von erfindungsgemäßen Ventilen, wobei eine Grundplatte zur Druckmittelversorgung der einzelnen Ventile vorgesehen ist.

Die dargestellte Ventileinheit besteht im vorliegenden Ausführungsbeispiel im Wesentlichen aus einer Grundplatte 1, an der mehrere Ventile 2a bis 2d über eine - nicht weiter gezeigte - Schraubverbindung befestigt sind. Außer den Ventilen 2a bis 2d steht ein Eingabe/Ausgabebaustein 3 mit der Grundplatte 1 in Verbindung. Der Eingabe/Ausgabebaustein 3 dient hier als elektrischer Eingang für Sensoren und als Anschluss für Relais oder dergleichen. Die Ventile 2a bis 2d sowie der EingangslAusgangsbaustein 3 verfügen je über eine untere Anschlussfläche 4, die im montierten Zustand mit einer korrespondierenden Anschlussfläche 5 der Grundplatte 1 in Kontakt steht. Die Anschlussfläche 5 verfügt über Querbohrungen 6 und 6b die eine Verbindung mit längs innerhalb der Grundplatte 1 verlaufenden Druckmittelkanälen 7a, 7b herstellt. Der Druckmittelkanal 7a ist für die Speisedruckversorgung der angeschlossenen Ventile 2a bis 2d vorgesehen; der Druckmittelkanal 7b dient der Entlüftung der angeschlossenen Ventile 2a bis 2d.

An der Schmalseite 8 der Ventile 2a und 2b sind jeweils zwei in herkömmlicher Weise (Stand der Technik) nach Art eines Push-In-Fittings ausgebildete Arbeitsanschlüsse 9a, 9b vorhanden. Über die Arbeitsanschlüsse 9a und 9b erfolgt der Anschluss zu einem - hier nicht weiter gezeigten - Druckmittelaggregat, beispielsweise einem Druckmittelzylinder. Dagegen weisen die Ventile 2c und 2d ein erfindungsgemäßes Anschlussrohrstück 10 auf, dessen proximales Ende an eine korrespondierende Anschlussöffnung am Ventilkörper 11 durch Angießen direkt angeformt ist. Am distalen Ende des Anschlussrohrstücks 10 ist der eigentliche Arbeitsanschluss 12 örtlich entfernt vom Ventilkörper 11 vorgesehen. Das Anschlussrohrstück 10 ist in diesem Ausfuhrungsbeispiel als eine flexible Druckmittelleitung aus einem weichen Kunststoff ausgebildet, wogegen der Ventilkörper 11 aus einem starren Kunststoff durch Spritzgießen geformt ist. Als Arbeitsanschluss 12 ist ein Kupplungselement vorgesehen, in welches eine weiterführende Verbindungsrohrleitung 13 eingesteckt und gehalten ist. Neben dem Anschlussrohrstück 10 ist am Ventil 2d ein weiteres Anschlussrohrstück 10c als zweiter Arbeitsanschluss vorgesehen.

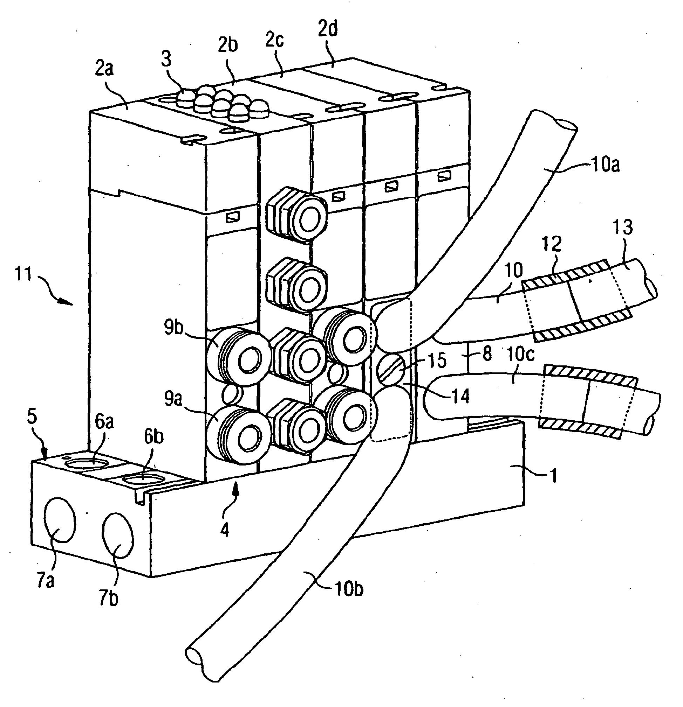

In alternativer Ausgestaltung der Anschlussmöglichkeit gemäß Figur 2c läuft das proximale Ende des Anschlussrohrstückes 10a in eine an die äußere Form des Ventilkörpers 11 angepasste Befestigungsplatte 14 aus. Zur lösbaren Befestigung der Befestigungsplatte 14 (an welcher das Anschlussrohrstück 10a direkt angeformt ist) an den Ventilkörper 11 ist eine Schraube 15 als Zentralschraube vorgesehen. Nach Lösen der Schraube 15 lässt sich somit das Anschlussrohrstück 10a sowie das Anschlussrohrstück 10b vom Ventil 2c entfernen, wobei im Prinzip die selben geometrischen Verhältnisse wie bei dem direkt am Ventilkörper 11 angeformten Anschlussrohrstück 10 und 10c des Ventils 2d herrschen.

Der Ventilkörper 11 der Ventile 2a bis 2d ist durch Spritzgießen aus einem starren Kunststoff hergestellt, wobei zunächst der Ventilkörper 11 bzw. die an die Form des Ventilkörpers 11 (im Falle des Ventils 2c) angepasste Befestigungsplatte 14 in einem ersten Spritzgießschritt geformt wird. Anschließend wird das Anschlussrohrstück 10, 10a, 10b, 10c in einem zweiten Spritzgießschritt aus einem relativ weicheren Kunststoff an den Ventilkörper 11 bzw. die Befestigungsplatte 14 direkt angeformt, um eine flexible Druckmittelleitung zum entfernt angeordneten Arbeitsanschluss 12 zu erzielen.

### Bezugszeichenliste

- 1: Grundplatte
- 2: Ventil
- 3: Eingangs/Ausgangsbaustein
- 4: Anschlussfläche
- 5: Anschlussfläche
- 6: Querbohrung
- 7: Druckmittelkanal
- 8: Schmalseite
- 9: Arbeitsanschluss
- 10: Anschlussrohrstück
- 11: Ventilkörper
- 12: Arbeitsanschluss
- 13: Verbindungsrohrleitung
- 14: Befestigungsplatte
- 15: Schraube

## Patentansprüche

1. Ventil zum Schalten eines Druckmittelflusses, insbesondere elektropneumatisches Mehrwegeventil, mit einem eine Ventilmechanik enthaltenden Ventilkörper (11), an dem mindestens ein Speisedruckanschluss sowie mindestens ein Arbeitsanschluss (12) zur ventilgesteuerten Beaufschlagung eines nachgeordneten Druckmittelaggregats vorgesehen ist, wobei der Arbeitsanschluss (12) und/oder der Speisedruckanschluss am distalen Ende eines Anschlussrohrstückes (10) angeordnet ist,
**dadurch gekennzeichnet, dass** dessen proximales Ende an eine korrespondierende Anschlussöffnung am Ventilkörper (11) direkt angeformt ist, die direkt am Ventilkörper (11) ausgebildet ist, wobei der Ventilkörper (11) aus einem starren Kunststoff besteht, wogegen das als flexible Druckmittelleitung ausgebildete Anschlussrohrstück (10) aus einem weichen Kunststoff besteht und direkt einstückig an den Ventilkörper (11) abgeformt ist, und dass an dem distalen Ende des Anschlussrohrstücks (10) ein Kupplungselement als Arbeitsanschluss (12) bzw. als Speisedruckanschluss vorgesehen ist, über welches eine weiterführende Verbindungsrohrleitung (13) lösbar anzuschließen ist.

2. Ventil zum Schalten eines Druckmittelflusses, insbesondere elektropneumatisches Mehrwegeventil, mit einem eine Ventilmechanik enthaltenden Ventilkörper (11), an dem mindestens ein Speisedruckanschluss sowie mindestens ein Arbeitsanschluss (12) zur ventilgesteuerten Beaufschlagung eines nachgeordneten Druckmittelaggregats vorgesehen ist, wobei der Arbeitsanschluss (12) und/oder der Speisedruckanschluss am distalen Ende eines Anschlussrohrstückes (10) angeordnet ist,
**dadurch gekennzeichnet, dass** dessen proximales Ende an eine korrespondierende Anschlussöffnung am Ventilkörper (11) direkt angeformt ist, die an einer an die äußere Form des Ventilkörpers (11) angepassten Befestigungsplatte (14) angeordnet ist, wobei der Ventilkörper (11) aus einem starren Kunststoff besteht, wogegen das als flexible Druckmittelleitung ausgebildete Anschlussrohrstück (10) aus einem weichen Kunststoff besteht und direkt an die Befestigungsplatte (14) angeformt ist, und dass an dem distalen Ende des Anschlussrohrstücks (10) ein Kupplungselement als Arbeitsanschluss (12) bzw. als Speisedruckanschluss vorgesehen ist, über welches eine weiterführende Verbindungsrohrleitung (13) lösbar anzuschließen ist.

3. Ventil nach Anspruch 1 oder 2,
**dadurch gekennzeichnet, dass** das Kupplungselement als Push-In-Fitting ausgebildet ist, in welches die weiterführende Verbindungsrohrleitung (13) mit dem einen Ende durch Einstecken ankoppelbar ist.

4. Ventil nach Anspruch 2,
**dadurch gekennzeichnet, dass** das proximale Ende des Anschlussrohrstücks (10a) in eine an die äußere Form des Ventilkörpers (11) angepasste Befestigungsplatte (14) ausläuft, worüber eine lösbare Verbindung des Arbeitsanschlusses bzw. Speisedruckanschlusses herstellbar ist.

5. Ventil nach Anspruch 4,
**dadurch gekennzeichnet, dass** die lösbare Befestigung über mindestens eine Schraube (15) oder nach Art einer Schnappverbindung erfolgt.

6. Verfahren zur Herstellung eines Ventils gemäß einem der vorstehenden Ansprüche, wobei der Ventilkörper (11) durch Spritzgießen aus einem starren Kunststoff hergestellt wird,
**dadurch gekennzeichnet, dass** zunächst der Ventilkörper (11) oder die an die Form des Ventilkörpers (11) angepasste Befestigungsplatte (14) in einem ersten Spritzgießschritt geformt wird und anschließend das Anschlussrohrstück (10) in einen zweiten Spritzgießschritt aus einem weichen Kunststoff an dem Ventilkörper (11) bzw. die Befestigungsplatte (14) direkt angeformt wird.

7. Verfahren nach Anspruch 6,
**dadurch gekennzeichnet, dass** sowohl der erste als auch der zweite Spritzgießschritt in demselben Spritzgießwerkzeug ausgeführt werden.

8. Ventileinheit bestehend aus einer Mehrzahl von Ventilen (2a-2d) gemäß einem der Ansprüche 1-5,
**dadurch gekennzeichnet, dass** die einzelnen Ventile (2a-2d) scheibenförmig ausgebildet sind und über die benachbarten großflächigen Kontaktseiten aneinander gereiht sind, wobei das Anschlussrohrstück (10) an der Schmalseite (8) des Ventils (2c-2d) angeordnet ist.

9. Ventileinheit nach Anspruch 8,
**dadurch gekennzeichnet, dass** zur Druckmittelversorgung der einzelnen Ventile (2a-2d) eine separate Grundplatte (1) mit mindestens einem längsverlaufenden Druckmittelkanal (7a, 7b) vorgesehen ist.

## Claims

1. A valve for switching a pressure medium flow, in particular an electropneumatic multiport valve, comprising a valve body (11) containing a valve mechanism, at which at least one feeding pressure connection and at least one working connection (12) are provided for the valve-controlled application of pressure to a downstream pressure medium unit, wherein said working connection (12) and/or said feeding pressure connection are arranged at the distal end of a connection tube piece (10),
**characterized in that** the proximal end thereof is directly and integrally formed on a corresponding connection opening on the valve body (11), the connection opening being directly formed at the valve body (11), wherein said valve body (11) is of a rigid plastic material whereas the connection tube piece (10) configured as a flexible pressure medium line is of a soft plastic material, and is directly and integrally formed at said valve body (11), and **in that**, at the distal end of said connection tube piece (10), a coupling element is provided as said working connection (12) or said feeding pressure connection and via which a continuing connection tube line (13) can be detachably coupled.

2. A valve for switching a pressure medium flow, in particular an electropneumatic multiport valve, comprising a valve body (11) containing a valve mechanism, at which at least one feeding pressure connection and at least one working connection (12) are provided for the valve-controlled application of pressure to a downstream pressure medium unit, wherein said working connection (12) and/or said feeding pressure connection are arranged at the distal end of a connection tube piece (10),
**characterized in that** the proximal end thereof is directly and integrally formed on a corresponding connection opening on the valve body (11), the connection opening being arranged on a mounting plate (14) adapted to the exterior form of said valve body (11), wherein said valve body (11) is of a rigid plastic material whereas the connection tube piece (10) configured as a flexible pressure medium line is of a soft plastic material, and is directly and integrally formed at said mounting plate (14), and **in that**, at the distal end of said connection tube piece (10), a coupling element is provided as said working connection (12) or said feeding pressure connection and via which a continuing connection tube line (13) can be detachably coupled.

3. The valve according to claim 1 or 2,
**characterized in that** said coupling element is configured as a push-in fitting, in which the continuing connection tube line (13) can be coupled at its one end by way of insertion.

4. The valve according to claim 2,
**characterized in that** the proximal end of said connection tube portion (10a) ends in a mounting plate (14) adapted to the exterior form of said valve body (11), enabling said working connection or said feeding pressure connection to be detachably mounted.

5. The valve according to claim 4,
**characterized in that** the detachable mounting is carried out via at least one screw (15) or in the manner of a snap fit.

6. A method of manufacturing a valve according to any one of the preceding claims, wherein said valve body (11) is manufactured by injection moulding of a rigid plastic material, **characterized in that**, firstly, said valve body (11), or said mounting plate (14) adapted to the form of said valve body (11), is formed in a first injection moulding step and subsequently said connection tube piece (10) is directly and integrally formed at said valve body (11) or said mounting plate (14), respectively, of a soft plastic material in a second injection moulding step.

7. The method according to claim 6,
**characterized in that** both the first and second injection moulding steps are carried out in the same injection moulding tool.

8. A valve unit comprising a plurality of valves (2a to 2d) according to any one of claims 1 to 5,
**characterized in that** the individual valves (2a to 2d) have a disk-like configuration and are aligned in series via large adjacent lateral contacting surfaces, wherein said connection tube piece (10) is arranged on the narrow side (8) of said valve (2c to 2d).

9. The valve unit according to claim 8,
**characterized in that** for the pressure medium supply of the individual valves (2a to 2d) a separate base plate (1) with at least one longitudinally extending pressure medium channel (7a, 7b) is provided.

## Revendications

1. Valve pour commuter l'écoulement d'un fluide sous pression, en particulier valve électropneumatique à plusieurs voies, comprenant un corps de valve (11) qui contient un mécanisme de valve et dans lequel sont prévus au moins un raccordement pour une pression d'alimentation ainsi qu'au moins un raccordement de travail (12) pour l'alimentation, sous la commande de la valve, d'un groupe à fluide sous pression branché en aval, dans laquelle le raccordement de travail (12) et/ou le raccordement de pression d'alimentation est agencé à l'extrémité distale d'une pièce tubulaire de raccordement (10),
**caractérisée en ce que** son extrémité proximale est conformée directement au niveau d'une ouverture de raccordement correspondante dans le corps de valve (11), ouverture qui est réalisée directement sur le corps de valve (11), **en ce que** le corps de valve (11) est réalisé en une matière synthétique rigide, cependant que la pièce tubulaire de raccordement (10), conçue sous forme de conduite flexible pour fluide sous pression, est réalisée en une matière plastique souple et conformée directement et d'un seul tenant sur le corps de valve (11), et **en ce qu'**à l'extrémité distale de la pièce tubulaire de raccordement (10) est prévu un élément d'accouplement à titre de raccordement de travail (12) ou respectivement à titre de raccordement de pression d'alimentation, élément d'accouplement via lequel il est possible de raccorder de manière détachable une conduite tubulaire de raccordement (13) menant à d'autres éléments.

2. Valve pour commuter l'écoulement d'un fluide sous pression, en particulier valve électropneumatique à plusieurs voies, comprenant un corps de valve (11) qui contient un mécanisme de valve et dans lequel sont prévus au moins un raccordement pour une pression d'alimentation ainsi qu'au moins un raccordement de travail (12) pour l'alimentation, sous la commande de la valve, d'un groupe à fluide sous pression branché en aval, dans laquelle le raccordement de travail (12) et/ou le raccordement de pression d'alimentation est agencé à l'extrémité distale d'une pièce tubulaire de raccordement (10),
**caractérisée en ce que** son extrémité proximale est conformée directement au niveau d'une ouverture de raccordement correspondante dans le corps de valve (11), ouverture qui est ménagée sur une plaque de fixation (14) adaptée à la forme extérieure du corps de valve (11), **en ce que** le corps de valve (11) est réalisé en une matière synthétique rigide, cependant que la pièce tubulaire de raccordement (10), conçue sous forme de conduite flexible pour fluide sous pression, est réalisée en une matière plastique souple et conformée directement sur la plaque de fixation (14), et **en ce qu'**à l'extrémité distale de la pièce tubulaire de raccordement (10) est prévu un élément d'accouplement à titre de raccordement de travail (12) ou respectivement à titre de raccordement de pression d'alimentation, élément d'accouplement via lequel il est possible de raccorder de manière détachable une conduite tubulaire de raccordement (13) menant à d'autres éléments.

3. Valve selon la revendication 1 ou 2, **caractérisée en ce que** l'élément d'accouplement est réalisé sous forme de raccordement "à pousser" (Push-In), dans lequel la conduite tubulaire de raccordement menant à d'autres éléments (13) est susceptible d'être accouplée par une extrémité par enfichage.

4. Valve selon la revendication 2, **caractérisée en ce que** l'extrémité proximale de la pièce tubulaire de raccordement (10a) se termine en une plaque de fixation (14) adaptée à la forme extérieure du corps de valve (11), via laquelle il est possible d'établir une fixation détachable du raccordement de travail ou respectivement du raccordement de pression d'alimentation.

5. Valve selon la revendication 4, **caractérisée en ce que** la fixation détachable a lieu via au moins une vis (15), ou à la manière d'une liaison à encliquetage.

6. Procédé pour réaliser une valve selon l'une des revendications précédentes, dans lequel le corps de valve (11) est produit à partir d'une matière synthétique rigide par coulée-injection, **caractérisé en ce que** l'on moule tout d'abord le corps de valve (11) ou la plaque de fixation (14) adaptée à la forme du corps de valve (11), dans une première passe de coulée-injection, et **en ce que** l'on surmoule ensuite directement la pièce tubulaire de raccordement (10) à partir d'une matière synthétique souple, dans une seconde passe de coulée-injection, sur le corps de valve (11) ou respectivement sur la plaque de fixation (14).

7. Procédé selon la revendication 6, **caractérisé en ce que** la première tout comme la seconde passe de coulée-injection sont exécutées dans le même outil de coulée-injection.

8. Unité de valves, constituée d'une pluralité de valves (2a à 2d) selon l'une des revendications 1 à 5, **caractérisée en ce que** les valves individuelles (2a à 2d) sont réalisées sous forme de disques et mises en rangées les unes contre les autres via les faces de contact voisines à grande surface, et **en ce que** la pièce tubulaire de raccordement (10) est agencée sur le petit côté (8) de la valve (2c à 2d).

9. Unité de valves selon la revendication 8, **caractérisée en ce qu'**il est prévu une plaque de base séparée (1) avec au moins un canal à fluide sous pression (7a, 7b) s'étendant en sens longitudinal, pour l'alimentation des valves individuelles (2a à 2d) en fluide sous pression.
